# NEUE EUROPÄISCHE PATENTSCHRIFT

(11) **EP 2 387 673 B2**
(45) Veröffentlichungstag und Bekanntmachung des Hinweises auf die Entscheidung über den Einspruch: **29.12.2021**
(45) Hinweis auf die Patenterteilung: 16.10.2013
(21) Anmeldenummer: 09806172.4
(22) Anmeldetag: 22.12.2009
(51) Int. Cl.: F16D 25/0638, F16D 25/10, F16F 15/14, F16D 13/68, F16D 21/06

(54) **KUPPLUNGSAGGREGAT**
CLUTCH UNIT
ENSEMBLE EMBRAYAGE

(30) Priorität: 19.01.2009 DE 102009005075
(43) Veröffentlichungstag der Anmeldung: 23.11.2011
(73) Patentinhaber: Schaeffler Technologies AG & Co. KG, 91074 Herzogenaurach (DE)
(72) Erfinder: ARNOLD, Johannes, 77855 Achern (DE); NÖHL, Oliver, 77830 Bühlertal (DE)
(74) Vertreter: DTS Patent- und Rechtsanwälte Schnekenbühl und Partner mbB
(86) Internationale Anmeldenummer: PCT/DE2009/001810
(87) Internationale Veröffentlichungsnummer: WO 2010/081455

(56) Entgegenhaltungen:
- EP-A1- 1 610 016
- EP-A1- 1 882 863
- WO-A1-2004/018897
- WO-A1-2009/152799
- DE-A1- 10 005 548
- DE-A1- 10 310 831
- DE-A1-102006 026 373
- DE-A1-102010 051 447
- FR-A1- 2 826 079
- JP-U- H0 592 543
- US-A- 5 295 411
- US-A- 6 026 940
- US-A1- 2007 181 395
- US-A1- 2008 283 330

## Beschreibung

Die Erfindung betrifft ein Kupplungsaggregat mit zwei übereinander angeordneten Nasskupplungen und einem Drehschwingungstilger.

Die Anwendung von Drehschwingungstilgern, beispielsweise Fliehkraftpendeln, in einem Antriebsstrang ist aus der DE 103 108 31 A1 bekannt. Weiterhin sind Kupplungsaggregate mit Nasskupplungen bekannt. Beispielsweise offenbaren die DE 10 2005 027 610 A1 oder WO 2009/152799 ein Kupplungsaggregat mit zwei radial übereinander angeordneten Nasskupplungen.

Die Unterbringung eines Drehschwingungstilgers im Nassraum des Kupplungsaggregats gestaltet sich schwierig, da eine ausreichende Abstimmung des Resonanzbereichs gewährleistet werden muss. Zu einer Störung des Resonanzbereichs tragen insbesondere Verdrehspiele von momentenübertragenden Anschlussteilen bei.

Aufgabe der Erfindung ist die Weiterentwicklung der Anwendung von Drehschwingungstilgern im Antriebsstrang von Kraftfahrzeugen insbesondere in Verbindung mit in einem Gehäuse untergebrachten Nasskupplungen.

Die Aufgabe der Erfindung wird durch ein Kupplungsaggregat gemäß Anspruch 1 gelöst. Vorteilhafte Weitergestaltungen sind in den abhängigen Ansprüchen definiert.

Dabei ist eine Anbindung des Drehschwingungstilgers an das Eingangsteil der zumindest einen Nasskupplung über den eingangsseitigen Lamellenträger vorgesehen. Dabei können im Falle der Verwendung von mittels Blechumformungsverfahren hergestellter, beispielsweise tiefgezogener Lamellenträger infolge unzureichend oder nur mit hohem Fertigungsaufwand darstellbarer Formschlüsse spielbehaftete Verbindungen zu den drehmomentübertragenden Anschlussbauteilen nicht ausreichend ausgeschlossen werden, so dass Schwingungsprobleme insbesondere während der Betätigung der zumindest einen Nasskupplung auftreten können. Beispielsweise können Klapper- oder Rasselgeräusche oder andere Schwingungseffekte auftreten, die unkomfortabel sind und zudem die Funktion des Drehschwingungstilgers negativ beeinflussen, so dass gegebenenfalls ein Drehschwingungstilger an dieser Position gar nicht eingesetzt werden kann. Es hat sich daher erfindungsgemäß als besonders vorteilhaft erwiesen, wenn der eingangsseitige Lamellenträger der zumindest einen Nasskupplung als gebauter Lamellenträger ausgeführt wird, der axial plan darstellbare Anlageflächen zwischen dem Flanschteil des Eingangsteils einerseits und der Trägerscheibe des Drehschwingungstilgers andererseits aufweist.

Gemäß einem vorteilhaften Ausführungsbeispiel ist der gebaute Lamellenträger aus über den Umfang verteilten Verbindungselementen gebildet, die ein als Flanschteil der zumindest einen Nasskupplung ausgebildetes Eingangsteil mit der Trägerscheibe axial beabstandet spielfrei verbinden. Durch die planen Anlageflächen der Verbindungselemente an dem Flanschteil beziehungsweise der Trägerscheibe wird eine besonders steife Anbindung der Trägerscheibe an das Eingangsteil der Nasskupplung erzielt, so dass die Übertragung des Drehmoments vom Eingangsteil auf den Drehschwingungstilger definiert und ohne Spiel erfolgen kann, so dass der Drehschwingungstilger, beispielsweise ein Fliehkraftpendel besonders gut auf die gewünschte Resonanzfrequenz beziehungsweise auf einen engen Resonanzbereich ausgelegt werden kann.

Es hat sich dabei als besonders vorteilhaft erwiesen dem Drehschwingungstilger einen Drehschwingungsdämpfer parallel zu schalten, der zwischen dem Gehäuse und der zumindest einen Nasskupplung angeordnet ist und dessen Ausgangsteil ebenfalls durch das Flanschteil des Eingangsteils der zumindest einen Nasskupplung gebildet ist. Im Weiteren kann die zumindest eine Nasskupplung aus beispielsweise zwei radial übereinander angeordneten Nasskupplungen für ein Doppelkupplungsgetriebe vorgesehen sein, wobei ein, vorzugsweise der radial äußere, oder beide eingangsseitigen Lamellenträger der beiden Nasskupplungen gebaut sein können.

Ein auf diese Weise gebaut ausgestalteter Lamellenträger ist in vorteilhafter Weise mit Verbindungselementen ausgestattet, die mit dem Flanschteil und der Trägerscheibe vernietet sind. Diese Verbindungselemente bilden zugleich die Drehmitnahme für die beispielsweise aus Stahl hergestellten Lamellen bei gleichzeitiger axial begrenzter Verlagerbarkeit, so dass bei einer wechselseitigen Anordnung von Lamellen und der Ausgangsseite der zumindest einen Nasskupplung zugeordneten, mit Reibbelägen versehenen Reiblamellen abhängig von einer axialen Beaufschlagung des auf diese Weise gebildeten Lamellenpakets durch einen druckbeaufschlagbaren Kolben gegen eine feststehende, beispielsweise von dem Flanschteil gebildete Endlamelle die Nasskupplung gezielt geöffnet, geschlossen und schlupfend betrieben werden kann. Die Drehmitnahme erfolgt dabei durch zu den Querschnittsprofilen der Verbindungselemente komplementäre Ausnehmungen der Lamellen insbesondere über deren Außenumfang, so dass die eingangsseitigen Lamellen in die Verbindungselemente in Umfangsrichtung formschlüssig und axial begrenzt verlagerbar eingehängt werden können.

Insbesondere aus Stabilitätsgründen können die Verbindungselemente endseitig jeweils zwei zueinander in Umfangsrichtung benachbarte Nietzapfen aufweisen, die entsprechende Öffnungen im Flanschteil und in der Trägerscheibe durchgreifen und anschließend vernietet werden. Dabei werden aus Montagegründen in einem vorteilhaften Ausführungsbeispiel mit einer aus dem Flanschteil gebildeten Endlamelle Lamellen und Reiblamellen auf die bereits mit dem Flanschteil verbundenen wie vernieteten Verbindungselemente aufgefädelt, bevor die Trägerscheibe mit den Verbindungselementen verbunden wie vernietet wird.

Es hat sich weiterhin insbesondere aus Stabilitätsgründen des Lamellenträgers als vorteilhaft gezeigt, wenn die Verbindungselemente zur Vernietung mit dem Flanschteil und/oder der Trägerscheibe Nietzapfen mit einem polygonalen Querschnitt aufweisen, die hierzu komplementär vorgesehene Ausnehmungen in dem Flanschteil und der Trägerscheibe durchgreifen und jeweils an deren dem den Verbindungselementen abgewandten Seiten vernietet werden. Dabei können die Polygone bereits durch deren Fertigung vorgegeben sein

Die Verbindungselemente können aus beispielsweise spanend hergestellten Stufenbolzen gebildet sein, wobei die Lamellen direkt in die vorzugsweise im Querschnitt runden Stufenbolzen eingehängt werden. Dabei können mindestens drei, beispielsweise sechs bis sechsunddreißig, bevorzugt neun bis vierundzwanzig Stufenbolzen über den Umfang verteilt werden. Alternativ oder zusätzlich können die Verbindungselemente aus beispielsweise drei bis sechzehn, vorzugsweise zwölf Blechteilen gebildet sein, die an ihren umfangsseitigen Enden nach radial außen abgewinkelt sind, so dass diese im Querschnitt ein Zahnflankenprofil aufweisen, an denen die Lamellen drehfest und verlagerbar aufgenommen werden können. Dabei können die Nietzapfen der Blechteile an dem flachen und/oder angewinkelten Bereich der Blechteile vorgesehen werden.

Zumindest ein, vorzugsweise mehrere über den Umfang verteilte Verbindungselemente können zumindest einen Stift aufweisen, der axial in Richtung des Gehäuses erweitert ist und eine dem Drehschwingungsdämpfer parallel geschaltete Reibeinrichtung steuert. Dabei können die Stifte eine Reibscheibe steuern, die mit dem Gehäuse verspannt ist, so dass sich bei einer Verdrehung des Gehäuses gegenüber dem Lamellenträger und damit zwischen Ein- und Ausgangsteil des Drehschwingungsdämpfers ein Reibmoment entwickelt, das zur Darstellung einer verschleppten Reibung auch ein Verdrehspiel aufweisen kann, wenn beispielsweise die Stifte in über den Umfang ausgerichtete Längsschlitze der Reibscheibe eingreifen.

Es hat sich weiterhin als vorteilhaft gezeigt, wenn der Drehschwingungsdämpfer mit einer eingangsseitigen wie primären und einer ausgangsseitigen wie sekundären Schwungmasse gekoppelt wird. Hierzu kann gemäß einer vorteilhaften Ausführungsform das Gehäuse der zumindest einen Nasskupplung als primäre Schwungmasse und die zumindest eine Nasskupplung als sekundäre Schwungmasse ausgelegt werden.

Die zumindest eine Nasskupplung kann in jeder Form und unabhängig von der Ausgestaltung von deren Umgebung vorteilhafterweise eingesetzt werden. Diese kann beispielsweise in einem Gehäuse untergebracht sein, in dem ein Druckmittel zur Kühlung und zur Betätigung der Kolben verwendet wird. Dabei kann die zumindest eine Nasskupplung im rotierenden, von dem Gehäuse gebildeten Nassraum untergebracht sein. Weiterhin kann die zumindest eine Nasskupplung in einem Gehäuse untergebracht sein, wobei die zumindest eine Nasskupplung nicht von einem hydraulisch betätigten Kolben sondern beispielsweise von einem elektrischen Aktor betätigt wird, so dass lediglich Druckmittel als Kühlmittel dosiert werden muss und entsprechend kein rotierender Nassraum erforderlich ist. Insbesondere ein Drehschwingungstilger in Form eines Fliehkraftpendels kann dabei unabhängig von dem Druckmittel ausgelegt werden.

Die Erfindung wird anhand der in den **Figuren 1 bis 15** dargestellten Ausführungsbeispiele näher erläutert. Dabei zeigen:
- Figur 1: einen Teilschnitt durch ein erfindungsgemäßes Kupplungsaggregat,
- Figur 2: den gebauten Lamellenträger der **Figur 1** im Detail,
- Figur 3: ein Detail mit zwei gebauten Lamellenträgern,
- Figur 4: einen Ausschnitt des Flanschteils der **Figur 1** in Ansicht,
- Figur 5: eine Ausgestaltung der Drehmitnahme der Lamellen,
- Figur 6: eine zu **Figur 5** alternative Drehmitnahme der Lamellen,
- Figuren 7 bis 9: ein Verbindungselement für den Lamellenträger in verschiedenen Ansichten,
- Figuren 10 bis 12: ein zu den **Figuren 7 bis 9** alternatives Verbindungselement für den Lamellenträger in verschiedenen Ansichten,
- Figur 13: ein Verbindungselement für den Lamellenträger zur Steuerung einer Reibeinrichtung in Ansicht
und
- Figuren 14 und 15: ein als Stufenbolzen ausgestaltetes Verbindungselement in offenem und geschlossenem Zustand in Ansicht.

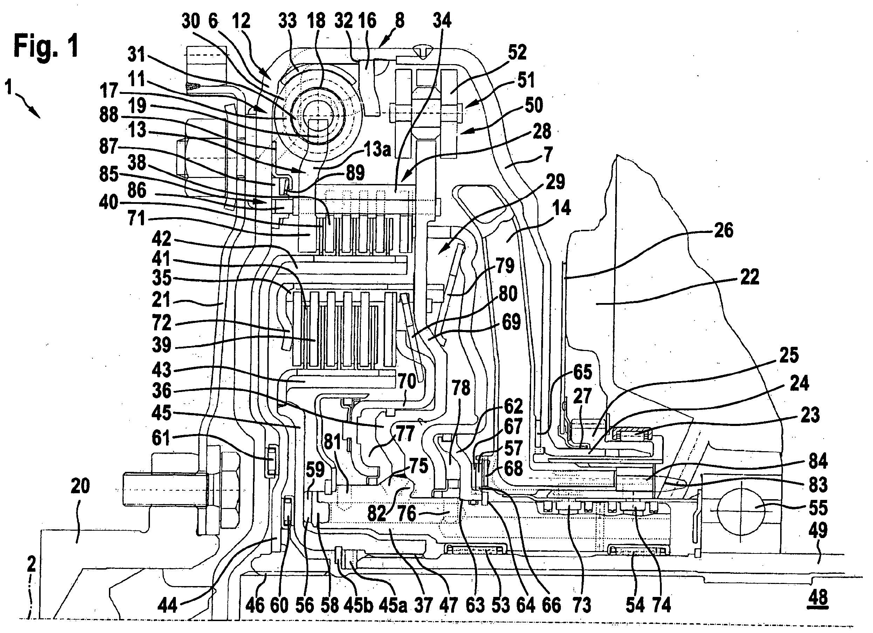

**Figur 1** zeigt das Kupplungsaggregat 1 in zusammengebautem Zustand als Teilschnitt oberhalb der Drehachse 2. Das Kupplungsaggregat 1 ist zwischen der Antriebseinheit, von dem nur die Kurbelwelle 20 dargestellt ist, und dem Getriebe, von dem nur das Getriebegehäuse 22 dargestellt ist, angeordnet. Das Gehäuse 8 des Kupplungsaggregats 1 ist an der Kurbelwelle 20 mittels eines axial flexiblen, axiale Schwingungen und Taumelschwingungen der Kurbelwelle 20 ausgleichenden Antriebsblech 21 wie Flexplate aufgenommen und wird durch diese angetrieben. Weiterhin ist das Gehäuse 8 mittels des Wälzlagers 23 verdrehbar am Getriebegehäuse 22 abgestützt, wobei zwischen dem ringförmigen axialen Ansatz 24 des Gehäuseteils 7 und dem Wälzlager 23 der Zahnkranz 25 für die Getriebeölpumpe, die auch das Druckmittel des Kupplungsaggregats 1 umwälzen kann, mittels eines hülsenförmigen Ansatzes angeordnet und von dem Ansatz 24 angetrieben wird. Der aus dem Zahnkranz 25 und dem Wälzlager 23, das über den Zahnkranz 25 auch eine Lagerung für das Gehäuse 8 an der Gehäusewandung des Getriebegehäuses 22 bildet, gebildete Pumpenantrieb ist vorzugsweise an dem Getriebegehäuse 22 vormontiert, wobei bei der Verbindung von Kupplungsaggregat 1 und Getriebe das Schöpfrohr 14 in der Zuführeinrichtung zentriert wird und die Führungsstifte 83 diese durchgreifen und im Getriebegehäuse 22 axial verlagerbar und das Schöpfrohr 14 drehfest lagernd aufgenommen werden. Auf dem axialen Ansatz 24 ist eine Dichtscheibe 26 beispielsweise aus Blech oder Kunststoff mit einer Dichtung 27 wie Radialwellendichtring zum Ansatz 24 zur Abdichtung des Gehäuses 8 gegenüber dem Getriebegehäuse 22 vorgesehen.

Innerhalb des zumindest teilweise mit Druckmittel befüllten Gehäuses 8 sind der Drehschwingungsdämpfer 12 und die beiden radial übereinander angeordneten Nasskupplungen 28, 29 aufgenommen. Das Eingangsteil des Drehschwingungsdämpfers 12 wird dabei von dem Gehäuse gebildet, das die in Umfangsrichtung wirksamen Energiespeicher 11, die in dem gezeigten Ausführungsbeispiel aus vorzugsweise zwei über den Umfang angeordneten Bogenfedergruppen mit jeweils zwei radial ineinander geschachtelten Bogenfedern 30, 31 gebildet sind, mittels den in die Stirnseiten der Bogenfedern 30, 31 radial eingreifenden Mitnehmern 17, 18 in Umfangsrichtung beaufschlagt. Die Mitnehmer 17 sind dabei aus über den Umfang angeordneten Einformungen des Gehäuseteils 6, die Mitnehmer 18 durch ausgestellte Bereiche des Ringflanschteils 16 gebildet. Das Ringflanschteil 16 wird nach Einlegen der Bogenfedern 30, 31 an den radialen Absatz 32 des Gehäuseteils 6 angelegt und axial fixiert wie beispielsweise verschweißt und dient der verliersicheren Aufnahme der Bogenfedern 30, 31 vor der Montage und der axialen Führung der Bogenfedern 30, 31 während des Betriebs. Zwischen den Bogenfedern 30 und dem radial äußeren Bereich des Gehäuseteils 6 ist eine Verschleißschutzschale 33 vorgesehen, die zweiteilig in Umfangsrichtung zwischen den Mitnehmern 17 angeordnet sind schwimmend gegenüber dem Gehäuse 8 gelagert sein können.

Der Drehschwingungsdämpfer 12 ist im Drehmomentfluss vor den Nasskupplungen 28, 29 wirksam, so dass das Ausgangsteil des Drehschwingungsdämpfers 12 gleichzeitig das gemeinsame Eingangsteil 13 der Nasskupplungen 28, 29 ist. Hierzu verfügt das Eingangsteil 13 über ein Flanschteil 13a mit den ausgangsseitigen Mitnehmern 19 des Drehschwingungsdämpfers 12, die als radial erweiterte Arme des Flanschteils 13a ausgebildet sind und im nicht verspannten Zustand der Bogenfedern 30, 31 am selben Umfang der Mitnehmer 17, 18 die Stirnflächen der Bogenfedern 30, 31 beaufschlagen und damit bei einer Relativverdrehung des Gehäuses 8 gegenüber dem Eingangsteil 13 der Nasskupplungen 28, 29 eine Verspannung der Bogenfedern 30, 31 bewirken, so dass die derartige Relativverdrehungen bewirkenden Drehmomentspitzen bedämpft werden, indem die als Energiespeicher 11 wirksamen Bogenfedern die Energie dieser Drehmomentspitzen kurzzeitig zwischenspeichern.

Über den Drehschwingungsdämpfer 12 wird das Drehmoment der Antriebseinheit in das Eingangsteil 13 eingetragen. Das Eingangsteil 13 verteilt das Drehmoment auf die eingangsseitigen Lamellenträger 34, 35 der Nasskupplungen 28, 29, die mittels einer gemeinsamen Trägerscheibe 36, die mit der Kupplungsnabe 37 fest verbunden wie verschweißt ist, zentriert und gelagert sind. Dabei ist der radial äußere Lamellenträger 34 in gebauter Weise hergestellt, während der radial innere Lamellenträger 35 tiefgezogen ist. Radial außen und vorzugsweise axial beabstandet und auf radial derselben Höhe ist an der Trägerscheibe 36 der Drehschwingungstilger 50, beispielsweise - wie gezeigt - ein Fliehkraftpendel 51 mit zu der Trägerscheibe 36 in Umfangsrichtung und radiale Richtung begrenzt verlagerbaren Fliehgewichten 52 angeordnet. In den eingangsseitigen Lamellenträger 34, 35 sind jeweils Lamellen 38, 39 eingehängt, die sich axial mit ausgangsseitigen Reiblamellen 40, 41 abwechseln und bei axialer Beaufschlagung einen Reibeingriff bilden. Die ausgangsseitigen Reiblamellen 40, 41 sind in Lamellenträgern 42, 43 eingehängt, die jeweils mit einer Nabe 44, 45 mit einer Verzahnung 46, 47 mit der Getriebeeingangswelle 48 beziehungsweise mit der um diese angeordnete, als Hohlwelle ausgebildete Getriebeeingangswelle 49 verbunden wie verschweißt sind und daher auf den beiden Getriebeeingangswellen 48, 49 gelagert und zentriert sind.

Im nicht verbauten Zustand des Kupplungsaggregats 1 sind die beiden Nasskupplungen 28, 29 mit der Kupplungsnabe 37 als eine Baueinheit ausgestaltet. Nach dem Einbau wird die Kupplungsnabe 37 mittels der Wälzlager 53, 54 auf der Getriebeeingangswelle 49 axial schwimmend gelagert. Die Getriebeeingangswelle 49 ist mittels des Wälzlagers 55 axial und radial fest im Getriebegehäuse 22 gelagert.

Die schwimmende Lagerung der Kupplungsnabe 37 ist begrenzt durch die beiden Anlaufscheiben 56, 57. Die Anlaufscheibe 56 ist einteilig aus Kunststoff gebildet und enthält das in die Stirnseite der Kupplungsnabe 37 eingebrachte Trägerteil 58 und die Schmierölnuten 59 gebildet. Die Nabe 45 ist gegenüber der Nabe 44 mittels des Wälzlagers 60 axial und verdrehbar angelegt. Die Nabe 44 stützt sich mittels des Wälzlagers 61 axial fest an dem Gehäuseteil 6 verdrehbar ab, so dass die Kupplungsnabe 37 über die Shimmscheibe 67 axial abgestützt ist, indem beispielsweise durch diese ein definiertes Spiel eingestellt wird. Die für die Lager 60, 61 nötige axiale Vorspannung wird mittels des axial wirksamen Energiespeichers 45a, beispielsweise einer Wellfeder eingestellt, der sich mittels der Sicherungsscheibe 45b an der Getriebeeingangswelle 49 abstützt. In die entgegengesetzte Richtung stützt sich die Kupplungsnabe 37 mittels des Dichtblechs 62, das an dem Absatz 63 mittels des Sicherungsrings 64 axial fest an dieser angeordnet ist, an dem Schöpfrohr 14 ab, das wiederum mittels der Anlaufscheibe 65, die als Wälzlager ausgebildet sein kann, an dem Gehäuseteil 7 axial abstützt. Zwischen dem Dichtblech 62 und dem Schöpfrohr 14 ist die axial wirksame Anlaufscheibe 57 angeordnet, der eine axial begrenzte Verlagerung der Kupplungsnabe 37 entgegen dessen Wirkung in Richtung des Gehäuseteils 7 erlaubt, so dass die Kupplungsnabe 37 in beide Richtungen axial begrenzt verlagerbar gegenüber dem Gehäuse 8 verlagerbar und daher schwimmend gelagert ist. Die Anlaufscheibe 57 ist aus einer mit dem Dichtblech 62 verzahnten Trägerscheibe 66 und einer darauf fest aufgenommenen Shimmscheibe 67 gebildet, die in Kontakt mit einer mit dem Schöpfrohr 14 verzahnten Anlaufscheibe 68 tritt.

Die beiden Nasskupplungen 28, 29 werden durch mittels eines Druckmittels axial verlagerbare Kolben 69, 70 beaufschlagt, die die Lamellen 38 beziehungsweise 39 axial mit den Reiblamellen 40 beziehungsweise 41 gegen eine Endlamelle 71, 72 verpressen und dadurch einen Reibeingriff bilden. Hierzu wird das Druckmittel jeweils über Drehdurchführungen 73, 74 in Versorgungsleitungen 75, 76 geleitet und in die Druckkammern 77, 78 dosiert, wodurch die Kolben 69, 70 entgegen der Wirkung der axial wirksamen Energiespeicher 79, 80 verlagert werden und die Nasskupplungen 28, 29 dadurch je nach angelegtem Druck des Druckmittels geschlossen werden. Wird der Druck in den Druckkammern 77, 78 abgebaut, werden die Nasskupplungen selbständig durch Entspannung der Energiespeicher 79, 80 wieder geöffnet. Die Versorgungsleitungen 81, 82 dienen der Kühlung der Nasskupplungen 28, 29 insbesondere den Reibbelägen der Reiblamellen 40, 41, die insbesondere unter schlupfenden Bedingungen der Nasskupplungen 28, 29 besonderem Wärmestress ausgesetzt sind. Das auf diese Weise dosierte Druckmittel kühlt die Reiblamellen 40, 41 ab und strömt nach radial außen, von wo es durch das mittels der Führungsstifte 83 fest mit dem Getriebegehäuse 22 verbundenen Schöpfrohr 14 abgeschöpft und über die Ableitung 84 dem Getriebesumpf zugeführt wird.

Zwischen dem Drehschwingungsdämpfer 12 und dem Eingangsteil 13 der Nasskupplungen 28, 29 kann eine Reibeinrichtung 85 vorgesehen sein. Hierzu kann mittels über den Umfang verteilter, axial erhabener Stifte 86 des Lamellenträgers 34 ein Reibring 87 beaufschlagt werden, der mittels des an dem Gehäuseteil 6 befestigten Halterings 88 zentriert und mittels des axial wirksamen Energiespeichers 89, der beispielsweise wie gezeigt eine Tellerfeder sein kann, gegenüber diesem verspannt ist. Zusätzlich oder alternativ kann die Reibeinrichtung 85 als Zentrierung der beiden Nasskupplungen 28, 29 im Gehäuse 8 vor der Endmontage dienen, solange diese noch nicht auf der Getriebeeingangswelle 49 zentriert ist.

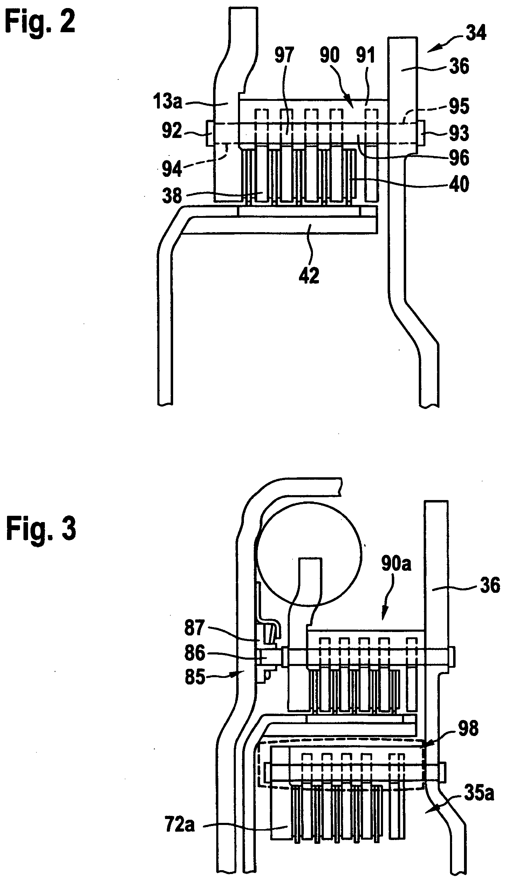

**Figur 2** zeigt den gebauten Lamellenträger 34 der **Figur 1** im Detail als Schnittdarstellung. Der Lamellenträger 34 wird aus dem Flanschteil 13a, der Trägerscheibe 36 und axial dazwischen angeordneten, über den Umfang verteilten Verbindungselementen 90 gebildet. In dem gezeigten Ausführungsbeispiel sind die Verbindungselemente 90 aus vorgebogenen Blechteilen 91 gebildet, die sich axial erstreckende Nietzapfen 92, 93 aufweisen, die durch entsprechende Öffnungen 94, 95 in dem Flanschteil 13a beziehungsweise Trägerscheibe 36 geführt und von außen gegen diese vernietet sind. Die in Umfangsrichtung weisenden Enden der Blechteile 91 sind zur Ausbildung von Zahnflanken 96 nach radial innen abgekantet oder gebogen, so dass sich im Querschnitt der Blechteile 91 ein Zahnflankenprofil ausbildet, an dem die Lamellen 38 eingehängt sind, die hierzu über ein komplementäres Außenprofil 97 verfügen, so dass die Lamellen 38 an dem Lamellenträger 34 zentriert sind und das an dem Lamellenträger 34 anliegende Drehmoment auf die Lamellen 38 übertragen wird. Die Lamellen 38 sind abwechselnd mit den Reiblamellen 40, die in den ausgangsseitigen Lamellenträger 42 drehfest und axial begrenzt verlagerbar eingehängt sind, geschichtet.

**Figur 3** zeigt eine zu dem tiefgezogenen Lamellenträger 35 der **Figur 1** alternative Ausführung in Form des Lamellenträgers 35a in gebauter Ausführung. Der Lamellenträger 35a weist den Verbindungselementen 90 der **Figur 2** vergleichbar ausgebildete Verbindungselemente 98 auf, die zwischen der Endlamelle 72a und der Trägerscheibe 36 vernietet sind. Im Weiteren zeigt die Figur 3 ein Verbindungselement 90a mit einem axial verlängerten Stift 86 auf, das beispielsweise an mehreren Umfangspositionen das Verbindungselement 90 der Figur 2 ersetzt und dadurch einen Zugriff des Lamellenträgers 34 (**Figur 1**) auf die Reibeinrichtung 85 ermöglicht, indem die Stifte 86 den Reibring 87 in Umfangsrichtung gegenüber dem Gehäuse 8 (**Figur 1**) des Kupplungsaggregats mitnehmen und so die Reibeinrichtung steuern.

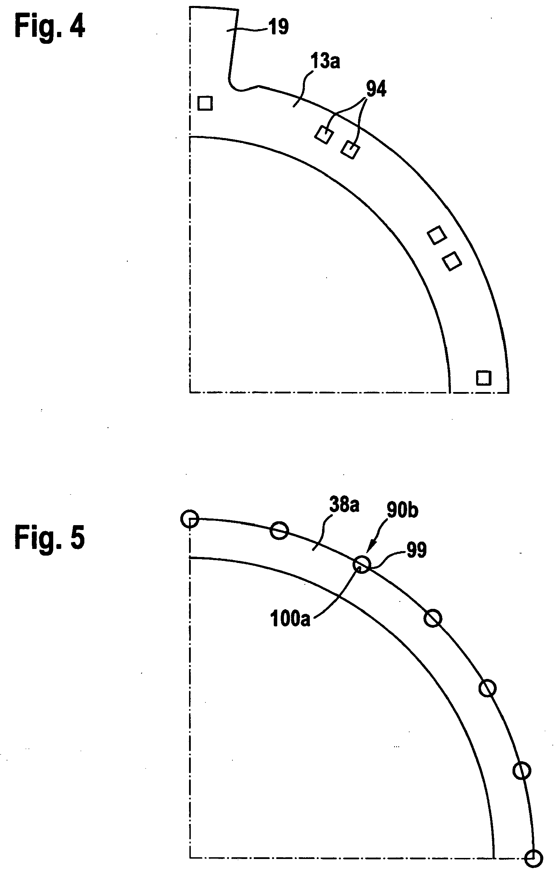

**Figur 4** zeigt einen Ausschnitt aus dem Flanschteil 13a mit dem Mitnehmer 19 für die Energiespeicher 11 des Drehschwingungsdämpfers 12 (**Figur 1**) sowie den Öffnungen 94 zur Aufnahme der Verbindungselemente 90 mittels der Nietzapfen 92 der **Figur 2**. Der Querschnitt der Öffnungen 94 ist polygonal - hier quadratisch - und komplementär zu den ebenfalls quadratischen Querschnitten der Nietzapfen 92 (**Figur 1**). Jedes Verbindungselement 90 (**Figur 2**) weist in dem gezeigten Ausführungsbeispiel zwei benachbarte Nietzapfen auf, so dass pro Verbindungselement jeweils mindestens zwei benachbarte Öffnungen 94 vorgesehen sind.

**Figur 5** zeigt einen Ausschnitt aus einer zu der Lamelle 38 der **Figur 1** ähnlichen Lamelle 38a, die beispielsweise aus Stahl hergestellt ist. Bezogen auf die Ausführung des Kupplungsaggregats 1 der **Figur 1** sind die Lamellen 38a in zu den Verbindungselementen 90, 90a des Lamellenträgers 34 der radial äußeren Nasskupplung 28 und/oder zu den Verbindungselementen 98 des Lamellenträgers 35 der radial inneren Nasskupplung 29 geänderten Verbindungselementen 90b, die aus Stufenbolzen 99 gebildet sind, eingehängt. Hierzu sind an den Lamellen 38a in der Anzahl der Stufenbolzen 99 über den Umfang verteilte kreissegmentförmige Ausnehmungen 100a vorgesehen, so dass die Lamellen 38a am nicht gezeigten Lamellenträger über die Stufenbolzen 99 zentriert und mitgenommen werden. Durch die im Vergleich zu den Verbindungselementen der **Figuren 1 bis 4** geringere, durch die Ausnehmungen 100a bereitgestellten Anlageflächen der Stufenbolzen 99 an den Anlageflächen der Lamelle 38a ist die Anzahl der Stufenbolzen 99 gegenüber der Anzahl dieser Verbindungselemente erhöht und beträgt in dem gezeigten Ausführungsbeispiel vierundzwanzig.

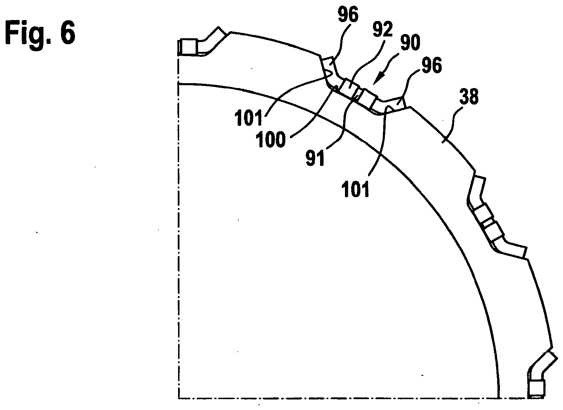

**Figur 6** zeigt einen Ausschnitt einer Lamelle 38 der **Figuren 1 bis 4** in Ansicht. In der Lamelle 38 sind über den Umfang verteilte, zu den Verbindungselementen 90 komplementäre Ausnehmungen 100 vorgesehen, die jeweils nach radial außen schräg verlaufende Anlageflächen 101 aufweisen, die mit den Zahnflanken 96 der Blechteile 91 in Umfangsrichtung einen Formschluss bilden, so dass eine Drehmitnahme der Lamelle 38 bei einer Drehbeaufschlagung der Verbindungselemente 90 durch den nicht gezeigten Lamellenträger erfolgt. Hierzu sind die Nietzapfen 92 beziehungsweise Nietzapfen 93 (**Figur 2**) bei einer Ansicht aus der anderen Richtung mit den Öffnungen 94 des Flanschteils 13a beziehungsweise den Öffnungen 95 der Trägerscheibe 36 (**Figuren 2** und **4**) vernietet.

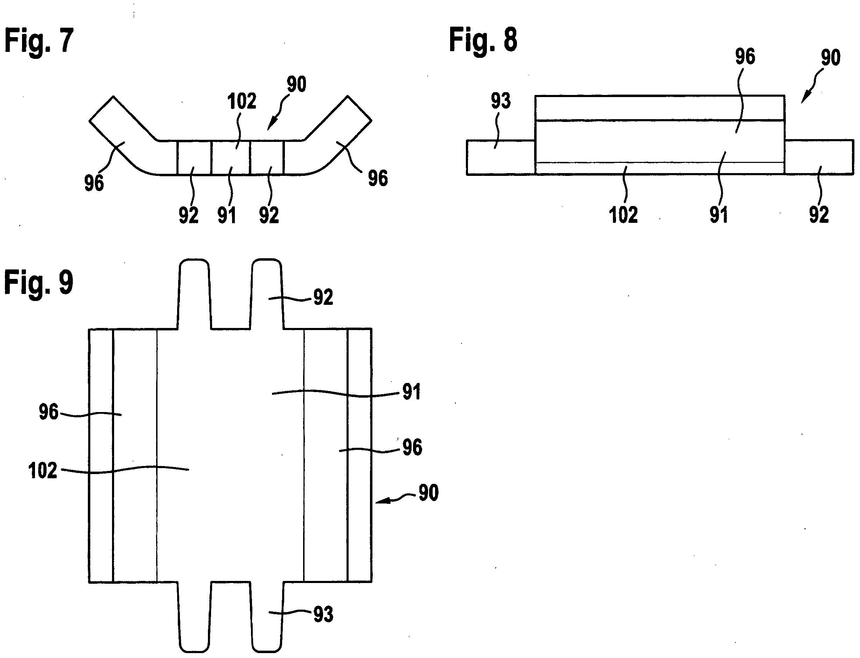

Die **Figuren 7 bis 9** zeigen Ansichten eines noch nicht vernieteten Verbindungselements 90 aus drei Richtungen wie es in den **Figuren 1 bis 4** in eingebautem, das heißt vernieteten Zustand dargestellt ist. Das aus dem gestanzten und vorgeformten Blechteil 91 gebildete Verbindungselement 90 weist zur Vernietung an den stirnseitigen Enden jeweils mindestens zwei Nietzapfen 92, 93 auf, die im Querschnitt vorzugsweise und wie dargestellt quadratisch ausgebildet sind. Dabei sind die Nietzapfen 92, 93 aus der ebenen Basisfläche 102 axial erweitert, gegen die die Zahnflanken 96 angewinkelt ausgebildet sind.

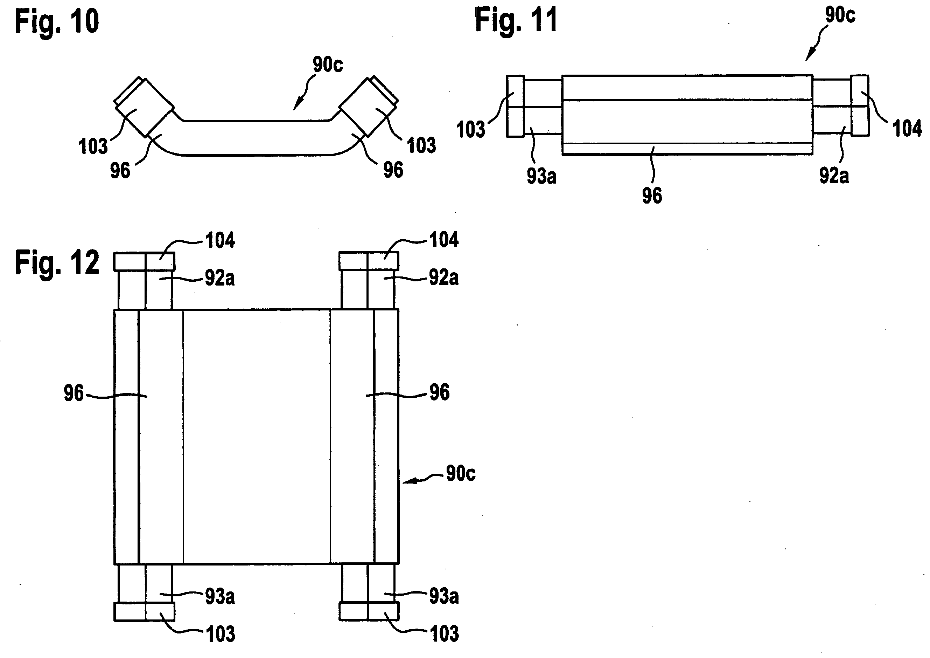

Die **Figuren 10 bis 12** zeigen eine zu dem in den **Figuren 7 bis 9** dargestellten Verbindungselement 90 alternative Variante eines Verbindungselements 90c in Ansicht aus drei Richtungen in vernietetem Zustand mit den jeweils gegenüber den Nietzapfen 92a, 93a erweiterten Nietköpfen 103, 104. Im Gegensatz zu dem Verbindungselement 90 der **Figuren 7 bis 9** sind die Nietzapfen 92a, 93a an den Zahnflanken 96 angeordnet und weisen daher jeweils einen größeren Abstand zueinander auf. Durch diesen weiteren Abstand kann eine größere Stabilität der Befestigung der Verbindungselemente 90c an dem Flanschteil 13a beziehungsweise an der Trägerscheibe 36 erzielt werden.

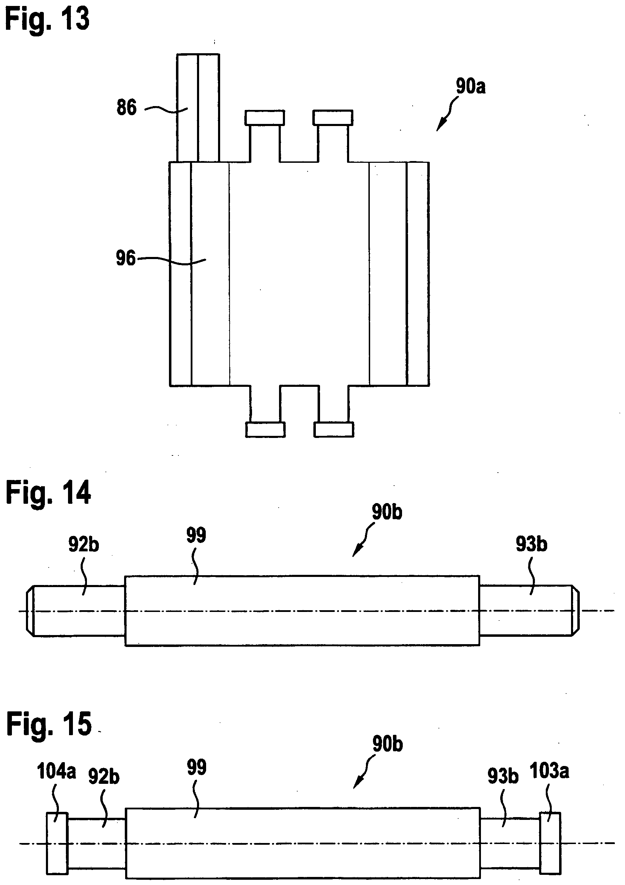

**Figur 13** zeigt eine Ansicht des Verbindungselements 90a der **Figuren 1** und **3** im vernieteten Zustand. Der Stift 86 zur Beaufschlagung und Steuerung der Reibeinrichtung 85 der **Figuren 1** und **3** ist axial aus der Zahnflanke 96 erweitert.

Die **Figuren 14 und 15** zeigen den Stufenbolzen 99 der **Figur 5** in Ansicht in unvernietetem (**Figur 14**) beziehungsweise vernietetem Zustand mit beidseitig angeordneten Nietzapfen 92b, 93b sowie im vernieteten Zustand den Nietköpfen 103a, 104a. Die Stufenbolzen 99 werden vorzugsweise spanend hergestellt, so dass die Nietzapfen 92b, 93b im Querschnitt rund ausgebildet sind.

### Bezugszeichenliste

- 1: Kupplungsaggregat
- 2: Drehachse
- 6: Gehäuseteil
- 7: Gehäuseteil
- 8: Gehäuse
- 11: Energiespeicher
- 12: Drehschwingungsdämpfer
- 13: Eingangsteil
- 13a: Flanschteil
- 14: Schöpfrohr
- 16: Ringflanschteil
- 17: Mitnehmer
- 18: Mitnehmer
- 19: Mitnehmer
- 20: Kurbelwelle
- 21: Antriebsblech
- 22: Getriebegehäuse
- 23: Wälzlager
- 24: axialer Ansatz
- 25: Zahnkranz
- 26: Dichtscheibe
- 27: Dichtung
- 28: Nasskupplung
- 29: Nasskupplung
- 30: Bogenfeder
- 31: Bogenfeder
- 32: Absatz
- 33: Verschleißschutzschale
- 34: Lamellenträger
- 35: Lamellenträger
- 35a: Lamellenträger
- 36: Trägerscheibe
- 37: Kupplungsnabe
- 38: Lamelle
- 38a: Lamelle
- 39: Lamelle
- 40: Reiblamelle
- 41: Reiblamelle
- 42: Lamellenträger
- 43: Lamellenträger
- 44: Nabe
- 45: Nabe
- 45a: Energiespeicher
- 45b: Sicherungsscheibe
- 46: Verzahnung
- 47: Verzahnung
- 48: Getriebeeingangswelle
- 49: Getriebeeingangswelle
- 50: Drehschwingungstilger
- 51: Fliehkraftpendel
- 52: Fliehgewicht
- 53: Wälzlager
- 54: Wälzlager
- 55: Wälzlager
- 56: Anlaufscheibe
- 57: Anlaufscheibe
- 58: Trägerteil
- 59: Schmierölnut
- 60: Wälzlager
- 61: Wälzlager
- 62: Dichtblech
- 63: Absatz
- 64: Sicherungsring
- 65: Anlaufscheibe
- 66: Trägerteil
- 67: Shimmscheibe
- 68: Anlaufscheibe
- 69: Kolben
- 70: Kolben
- 71: Endlamelle
- 72: Endlamelle
- 72a: Endlamelle
- 73: Drehdurchführung
- 74: Drehdurchführung
- 75: Versorgungsleitung
- 76: Versorgungsleitung
- 77: Druckkammer
- 78: Druckkammer
- 79: Energiespeicher
- 80: Energiespeicher
- 81: Versorgungsleitung
- 82: Versorgungsleitung
- 83: Führungsstift
- 84: Ableitung
- 85: Reibeinrichtung
- 86: Stift
- 87: Reibring
- 88: Haltering
- 89: Energiespeicher
- 90: Verbindungselement
- 90a: Verbindungselement
- 90b: Verbindungselement
- 90c: Verbindungselement
- 91: Blechteil
- 92: Nietzapfen
- 92a: Nietzapfen
- 92b: Nietzapfen
- 93: Nietzapfen
- 93a: Nietzapfen
- 93b: Nietzapfen
- 94: Öffnung
- 95: Öffnung
- 96: Zahnflanke
- 97: Außenprofil
- 98: Verbindungselement
- 99: Stufenbolzen
- 100: Ausnehmung
- 100a: Ausnehmung
- 101: Anlagefläche
- 102: Basisfläche
- 103: Nietkopf
- 103a: Nietkopf
- 104: Nietkopf
- 104a: Nietkopf

## Patentansprüche

1. Kupplungsaggregat (1) für einen Antriebsstrang mit einer Antriebseinheit und einem nachfolgend angeordneten Getriebe mit zumindest einer in einem von der Antriebseinheit angetriebenen Gehäuse (8) angeordneten Nasskupplung (28, 29) mit radial übereinander angeordneten, in einem eingangsseitigen und einem ausgangsseitigen Lamellenträger (34, 35, 35a, 42, 43) aufgenommenen und sich in axiale Richtung abwechselnden Lamellen ( 38 , 38a , 39 ) und Reiblamellen (40, 41), wobei der eingangsseitige Lamellenträger (34, 35) mit einer auf einer Kupplungsnabe (37) fest aufgenommenen Trägerscheibe (36) fest verbunden ist und an der Trägerscheibe (36) ein Drehschwingungstilger (50) angeordnet ist, **dadurch gekennzeichnet, dass** der eingangsseitige Lamellenträger (34, 35a) gebaut ist, wobei der Lamellenträger (34, 35a) aus über den Umfang verteilten Verbindungselementen (90, 90a, 90b, 90c, 98) gebaut ist, die ein als Flanschteil (13a) der zumindest einen Nasskupplung (28, 29) ausgebildetes Eingangsteil (13) mit der Trägerscheibe (36) axial beabstandet spielfrei verbinden.

2. Kupplungsaggregat (1) nach Anspruch 1, **dadurch gekennzeichnet, dass** die Verbindungselemente (90, 90a, 90c, 98) endseitig jeweils mindestens zwei zueinander in Umfangsrichtung benachbarte Nietzapfen (92, 92a, 93, 93a) aufweisen.

3. Kupplungsaggregat (1) nach einem der Ansprüche 1 bis 2, **dadurch gekennzeichnet, dass** die Verbindungselemente (90, 90a, 90c, 98) zur Vernietung mit dem Flanschteil (13a) und/oder der Trägerscheibe (36) Nietzapfen (92, 92a, 93, 93a) mit einem polygonalen Querschnitt aufweisen, die hierzu komplementär vorgesehene Öffnungen (94, 95) in dem Flanschteil (13a) beziehungsweise in der Trägerscheibe (36) durchgreifen und jeweils an deren dem den Verbindungselementen (90, 90a, 90c, 98) abgewandten Seiten vernietet werden.

4. Kupplungsaggregat (1) nach einem der Ansprüche 1 bis 3, **dadurch gekennzeichnet, dass** das Flanschteil (13a) eine Endlamelle (71) der zumindest einen Nasskupplung (28) bildet.

5. Kupplungsaggregat (1) nach einem der Ansprüche 1 bis 4, **dadurch gekennzeichnet, dass** dem Drehschwingungstilger (50) über die Verbindungselemente (90, 90a, 90b, 90c, 98) ein zwischen dem Gehäuse (8) und der zumindest einen Nasskupplung (28, 29) wirksamer Drehschwingungsdämpfer (12) parallel geschaltet ist.

6. Kupplungsaggregat (1) nach Anspruch 5, **dadurch gekennzeichnet, dass** zumindest ein Stift (86) eines Verbindungselements (90a) axial in Richtung des Gehäuses (8) erweitert ist und eine dem Drehschwingungsdämpfer (12) parallel geschaltete Reibeinrichtung (85) steuert.

7. Kupplungsaggregat (1) nach einem der Ansprüche 1 bis 6, **dadurch gekennzeichnet, dass** zwei übereinander angeordnete Nasskupplungen (28, 29) vorgesehen sind, wovon zumindest eine einen gebauten Lamellenträger (34, 35a) aufweist.

8. Kupplungsaggregat (1) nach Anspruch 1, **dadurch gekennzeichnet, dass** der Drehschwingungstilger (50) ein Fliehkraftpendel (51) ist.

## Claims

1. Clutch unit (1) for a drive train with a drive unit and with a following transmission having at least one wet clutch (28, 29) arranged in a housing (8) driven by the drive unit, with lamellae (38, 38a, 39) and friction lamellae (40, 41) which are arranged radially one above the other, are received in an input-side and an output-side lamella carrier (34, 35, 35a, 42, 43) and alternate in the axial direction, wherein the input-side lamella carrier (34, 35) is connected fixedly to a carrier disc (36) received fixedly on a clutch hub (37) and a torsional vibration absorber (50) is arranged on the carrier disc (36), **characterized in that** the input-side lamella carrier (34, 35a) is built up, wherein the lamella carrier (34, 35a) is built up from circumferentially distributed connection elements (90, 90a, 90b, 90c, 98) which connect an input part (13), designed as a flange part (13a) of the at least one wet clutch (28, 29), to the carrier disc (36) in an axially spaced-apart and play-free manner.

2. Clutch unit (1) according to claim 1, **characterized in that** the connection elements (90, 90a, 90c, 98) have on the end face in each case at least two rivet studs (92, 92a, 93, 93a) adjacent to one another in the circumferential direction.

3. Clutch unit (1) according to one of claims 1 to 2, **characterized in that** the connection elements (90, 90a, 90c, 98) have, for riveting to the flange part (13a) and/or the carrier disc (36), rivet studs (92, 92a, 93, 93a) with a polygonal cross section which pass through orifices (94, 95), provided complementarily thereto, in the flange part (13a) or in the carrier disc (36) and are in each case riveted on their sides facing away from the connection elements (90, 90a, 90c, 98).

4. Clutch unit (1) according to one of claims 1 to 3, **characterized in that** the flange part (13a) forms an end lamella (71) of the at least one wet clutch (28).

5. Clutch unit (1) according to one of claims 1 to 4, **characterized in that** a torsional vibration damper (12) active between the housing (8) and the at least one wet clutch (28, 29) is connected in parallel to the torsional vibration absorber (50) via the connection elements (90, 90a, 90b, 90c, 98).

6. Clutch unit (1) according to claim 5, **characterized in that** at least one pin (86) of a connection element (90a) is widened axially in the direction of the housing (8) and controls a friction device (85) connected in parallel to the torsional vibration damper (12).

7. Clutch unit (1) according to one of claims 1 to 6, **characterized in that** two wet clutches (28, 29) arranged one above the other are provided, at least one of which has a built-up lamella carrier (34, 35a).

8. Clutch unit (1) according to claim 1, **characterized in that** the torsional vibration absorber (50) is a centrifugal pendulum (51).

## Revendications

1. Ensemble embrayage (1) pour une chaîne cinématique avec une unité d'entraînement en entrée et une boîte de vitesses disposée à la suite avec au moins un embrayage à bain d'huile (28, 29) disposé dans un carter (8) entraîné par l'unité d'entraînement en entrée avec des lamelles de frottement (40, 41) et des lamelles (38, 38a, 39) disposées les unes au-dessus des autres dans le plan radial, logées dans un support de lamelles (34, 35, 35a, 42, 43) situé du côté d'entrée et du côté de sortie et alternant dans la direction axiale, le support de lamelles (34, 35) du côté d'entrée étant relié fixement à un disque de support (36) logé fixement sur un moyeu d'embrayage (37) et un amortisseur d'oscillations rotatives (50) étant disposé au niveau du disque de support (36), **caractérisé en ce que** le support de lamelles (34, 35a) situé du côté d'entrée est construit d'une certaine façon, le support de lamelles (34, 35a) étant construit à partir des éléments de liaison (90, 90a, 90b, 90c, 98) répartis sur l'ensemble de la périphérie et reliant sans jeu à une certaine distance dans le plan axial une partie d'entrée (13) réalisée sous la forme d'une partie de bride (13a) de l'au moins un embrayage à bain d'huile (28, 29) au disque de support (36).

2. Ensemble embrayage (1) selon la revendication 1, **caractérisé en ce que** les éléments de liaison (90, 90a, 90c, 98) comportent sur le côté d'extrémité respectivement au moins deux tenons rivetés (92, 92a, 93, 93a) connexes l'un par rapport à l'autre dans la direction périphérique.

3. Ensemble embrayage (1) selon l'une quelconque des revendications 1 à 2, **caractérisé en ce que** les éléments de liaison (90, 90a, 90c, 98) comportent, pour le rivetage avec la partie de bride (13a) et/ou le disque de support (38), des tenons rivetés (92, 92a, 93, 93a) de section transversale polygonale agrippant des ouvertures (94, 95) prévues de façon complémentaire dans la partie de bride (13a) et/ou dans le disque de support (36) et étant respectivement rivetés aux éléments de liaison (90, 90a, 90c, 98) au niveau de leurs côtés opposés.

4. Ensemble embrayage selon l'une quelconque des revendications 1 à 3, **caractérisé en ce que** la partie de bride (13a) forme une lamelle d'extrémité (71) de l'au moins un embrayage à bain d'huile (28).

5. Ensemble embrayage (1) selon l'une quelconque des revendications 1 à 4, **caractérisé en ce qu'**un amortisseur d'oscillations (12) fonctionnant entre le carter (8) et l'au moins un embrayage à bain d'huile (28, 29) est connecté parallèlement à l'amortisseur d'oscillations (50) via les éléments de liaison (90, 90a, 90b, 90c, 98).

6. Ensemble embrayage (1) selon la revendication 5, **caractérisé en ce qu'**au moins une tige (86) d'un élément de liaison (90a) s'élargit dans le plan axial en direction du carter (8) et commande un dispositif de frottement (85) connecté en parallèle de l'amortisseur d'oscillations (12).

7. Ensemble embrayage (1) selon l'une quelconque des revendications 1 à 6, **caractérisé en ce que** deux embrayages à bain d'huile (28, 29) disposés l'un au-dessus de l'autre sont prévus, parmi lesquels au moins un comporte un support de lamelles (34, 35a) intégré.

8. Ensemble embrayage (1) selon la revendication 1, **caractérisé en ce que** l'amortisseur d'oscillations rotatives (50) est un pendule à force centrifuge (51).
